# EUROPÄISCHE PATENTSCHRIFT

(11) **EP 2 248 690 B1**
(45) Veröffentlichungstag und Bekanntmachung des Hinweises auf die Patenterteilung: **27.03.2013**
(21) Anmeldenummer: 10401066.5
(22) Anmeldetag: 04.05.2010
(51) Int. Cl.: B60G 3/01, B60G 17/0165, B60G 21/10, B60B 35/10, B62D 49/06, B60G 9/02, B60B 23/12, B62D 61/00, B62D 63/02, A01C 23/00, A01M 7/00

(54) **Fahrgestell für Spezialfahrzeuge**
Frame for special vehicles
Châssis pour véhicules spéciaux

(30) Priorität: 08.05.2009 DE 102009025770
(43) Veröffentlichungstag der Anmeldung: 10.11.2010
(73) Patentinhaber: Herbert Dammann GmbH, 21614 Buxtehude (DE)
(72) Erfinder: Dammann Herbert, 21614 Buxtehude (DE)
(74) Vertreter: Hansen, Jochen

(56) Entgegenhaltungen:
- EP-A1- 1 685 988
- EP-A1- 2 058 154
- EP-A2- 0 157 592
- EP-A2- 1 502 769
- EP-A2- 1 541 021
- WO-A1-98/30088
- WO-A1-99/25574
- WO-A1-2010/020607
- DE-A1- 3 810 386
- FR-A1- 2 669 804
- FR-A1- 2 734 499
- FR-A1- 2 809 196
- US-A- 5 597 172
- US-A1- 2002 175 467
- US-A1- 2007 158 920
- US-B1- 7 163 227

## Beschreibung

Die Erfindung betrifft ein Fahrgestell für Spezialfahrzeuge, mit höhenverstellbaren Radaufhängungen, die vom Fahrer fernsteuerbare Vertikalstelleinheiten zur Veränderung der Bodenfreiheit aufweisen, wobei die Radaufhängungen mit vom Fahrer fernsteuerbaren Horizontalstelleinheiten zur Veränderung der Spurweite während der Fahrt versehen sind.

Aus dem Stand der Technik sind unterschiedliche Verfahren und Anordnungen bekannt, um die Spurweite und Höhe von Spezialfahrzeugen zu verstellen.

Ein in der Höhe verstellbares Fahrgestell ist aus der DE 103 20 291 A1 bekannt. Das dort offenbarte hydraulische Fahrwerkssystem besteht aus einer zentralen Hydraulikeinheit und vertikal angeordneten Hydraulikzylindern zur Höhenverstellung der Radaufhängungen. Mit Hilfe dieses hydraulischen Fahrwerkssystems kann die Last des Fahrzeugs beim Fahren am Hang oder in Kurven immer zu gleichen Teilen auf die Räder einer Fahrzeugseite verteilt werden. Des Weiteren können Bodenunebenheiten, insbesondere am Hang während der Fahrt ausgeglichen und die Bodenfreiheit verändert werden.

Aus der EP 1 502 769 A2 ist ein landwirtschaftliches Fahrzeug bekannt, dessen Fahrgestell Radaufhängungen aufweist, die mit vom Fahrer fernsteuerbaren Horizontalstelleinheiten zur Veränderung der Spurweite während der Fahrt versehen sind.

Weiter beschreibt die US 6,311,795 B1 eine Anordnung zum Heben und Senken eines Fahrgestells für landwirtschaftliche Fahrzeuge, bei der das Fahrzeug derart ausgestaltet ist, dass sowohl die Spurweite als auch die Bodenfreiheit veränderbar ist. Die Veränderung der Spurweite kann hierbei unter anderem über Stelleinheiten erfolgen, an denen die Räder des Fahrzeugs befestigt sind. Die Verstellung in der Höhe kann über Hydraulikstelleinheiten erfolgen, deren Hubbewegung zu einer Verstellung von Radaufnahmen führt, wodurch die Bodenfreiheit des Fahrzeugs variiert wird. Die Verstellung der Spurweite erfolgt alternativ über Schwenkausleger, an denen die Radaufnahmen angeordnet sind.

Aus der US 6,454,294 B1 ist ein landwirtschaftliches Fahrzeug bekannt, welches in der Bodenfreiheit und in der Spurweite variabel einstellbar ist. Die Veränderung der Bodenfreiheit erfolgt hierbei über indirekt wirkende Hydraulikzylinder, die auf ein Verstellgestell verstellend einwirken. Die Verstellung der Spurweite erfolgt über ein ineinander verschiebbares Verstellsystem, welches ebenfalls über hydraulische Stelleinheiten veränderbar ist.

Die US 3,236,324 A beschreibt eine Anordnung für ein landwirtschaftliches Fahrzeug, das in dessen Spurweite und Bodenfreiheit veränderbar ist. Das Fahrzeug weist dabei ein Fahrgestell mit einer Plattform auf, an dem einzeln ansteuerbare Radaufhängungen angeordnet sind. Die Veränderung der Spurweite erfolgt ein- oder beidseitig mit Hilfe von Hydraulikzylindern, welche durch Druckbeaufschlagung ausgefahren werden können und so eine Spurverbreiterung während der Vorwärts- oder Rückwärtsbewegung ausführen. Die Verstellung der Bodenfreiheit erfolgt ebenfalls mit Hilfe von druckbeaufschlagbaren Hydraulikzylindern, die sich dann in deren Länge verändern.

Die EP 1 685 988 A1 offenbart ein Federungssystem für ein landwirtschaftliches Fahrzeug, insbesondere für eine landwirtschaftliche Feldspritze, mit einer vertikal angeordneten Stützrohranordnung mit einer axial verschiebbaren und drehbaren Lagerung, einer am unteren Ende des Stützrohrs befestigten Radaufhängung, einem drehbar um die Stützrohrachse angeordneten Lenkarm, wobei das Stützrohr relativ zum Lenkarm axial verschiebbar ist, einer Halterung und einem Federungskörper, der zwischen dem oberen Ende des Stützrohrs und der Halterung aufgenommen ist und eine Dämpfung für die Radaufhängung bereitstellt, wenn das Stützrohr axial im Stützrohrlager bewegt wird. Dabei handelt es sich insbesondere um eine Luftfederung, die nur eine sehr begrenzte Höheneinstellung über den angelegten Luftdruck erlaubt. Ferner weist das landwirtschaftliche Fahrzeug bzw. dessen Fahrgestell noch eine Verstellung der Spurweite auf.

Die DE 10 2007 050 252 A1 offenbart ein Niveauregulierungssystem eines Kraftfahrzeugs. Hierbei ist jedem Rad des Kraftfahrzeugs ein fluid-betätigbares, insbesondere als Federbein ausgebildetes Niveauregulierungselement zugeordnet, welche individuell angepasst und angesteuert werden können, so dass der Aufbau des Fahrzeugs immer in einer horizontalen Lage gehalten werden kann. Ein entsprechendes Steuerungsprogramm mit zugeordneten Sensoren ist ebenso vorgesehen.

Aus der nachveröffentlichten DE 10 2007 053 906 ist ein Fahrgestell bekannt für Spezialfahrzeuge mit höhenverstellbaren Radaufhängungen, die vom Fahrer fernsteuerbare Vertikalstelleinheiten zur Veränderung der Bodenfreiheit aufweisen, wobei die Radaufhängungen mit vom Fahrer fernsteuerbaren Horizontalstelleinheiten zur Veränderung der Spurweite während der Fahrt versehen sind.

Aufgabe der Erfindung ist es, ein Fahrgestell gemäß DE 10 2007 053 906 A1 anzugeben, mit dem eine möglichst schonende Behandlung landwirtschaftlicher Kulturen und auch das Befahren öffentlicher Wege und Straßen möglich ist, ohne dass zeitaufwändige Umbauten vorgenommen werden müssten, wobei eine gewünschte Ausrichtung des Fahrgestell-Grundrahmens in jedem Gelände gewährleistet ist, so dass etwaige Aufbauten und/oder Gerätschaften in einer gewünschten Ausrichtung orientiert sind.

### Gelöst wird diese Aufgabe mit einem Fahrgestell gemäß

DE 10 2007 053 906 A1, bei dem die höhenverstellbaren Radaufhängungen jeweils einzeln ansteuerbar und verstellbar sind. Das Spezialfahrzeug kann so an mehrdimensional schrägen Abhängen oder Auffahrten fahren, wobei die einzelnen höhenverstellbaren Radaufhängungen einzeln angesteuert werden, um so das Fahrzeug stets in einer gewünschten Lage zur Hanglage auszurichten. Hierbei kann insbesondere die horizontale Ausrichtung des Spezialfahrzeuges besonders bevorzugt sein, da bei einer horizontalen Ausrichtung des Spezialfahrzeuges das gesamte Gewicht auf alle einzelnen Räder verteilt wird. Beispielsweise können dies vier Räder sein. Selbstverständlich ist eine Ausgestaltung mit mehr als vier Rädern möglich und nach Einsatzbedingungen auch sinnvoll. Insbesondere bei schweren Lasten wird hierdurch das Gewicht noch besser auf dem Hang verteilt, so dass eine übermäßige Radlast und ein Abrutschen oder zu starkes Einsinken des Spezialfahrzeuges verhindert wird. Eine Fahrt schräg über einen Hang ist mit dieser Ausgestaltung möglich, so dass ein mehrdimensionales Gefälle ausgeglichen werden kann. Insbesondere ist die Einzelansteuerung der einzelnen höhenverstellbaren Radaufhängungen besonders vorteilhaft, wenn es an dem zu befahrenden Hang tiefe Unebenheiten in der Fahrspur gibt, die über die Einzelansteuerung der einzelnen höhenverstellbaren Radaufhängungen ausgeglichen werden können.

Dadurch, dass die höhenverstellbaren Radaufhängungen jeweils seitenweise, nämlich die höhenverstellbaren Radaufhängungen in Fahrtrichtung auf der linken Seite des Spezialfahrzeuges und die höhenverstellbaren Radaufhängungen in Fahrtrichtung auf der rechten Seite des Spezialfahrzeuges, ansteuerbar und verstellbar sind, sind Fahrten am Hang im Wesentlichen senkrecht zum Gefälle des Hanges einfach realisierbar, da dass Gesamtgewicht des Spezialfahrzeuges auf alle Räder gleichmäßig verteilt wird und eine nahezu horizontale Ausrichtung des Spezialfahrzeuges und der Aufbauten darauf möglich ist. Der Fahrer des Spezialfahrzeuges braucht sich nicht mehr speziell um die Hanglage zu kümmern und permanent das Fahrzeug auf ein mögliches Umkippen am Hang zu überwachen. Der Fahrer kann sich vielmehr um die eigentlichen Aufgaben seiner Arbeit kümmern.

Wenn die höhenverstellbaren Radaufhängungen jeweils paarweise, nämlich die höhenverstellbaren Radaufhängungen an der Front des Spezialfahrzeuges und die höhenverstellbaren Radaufhängungen in Fahrtrichtung am Heck des Spezialfahrzeuges, ansteuerbar und verstellbar sind, kann das Spezialfahrzeug insbesondere an einem Hang hinauf fahren, wobei das Spezialfahrzeug und insbesondere die Aufbauten horizontal ausgerichtet sind. Die Aufbauten auf der hangabwärtigen Seite können durch das Anheben des hangabwärtigen Fahrzeughecks und entsprechendes Ausnivellieren einen wesentlich höheren Abstand zu der Hangoberfläche haben, wodurch etwaige Anbauten oder Gerätschaften des Spezialfahrzeuges über Hindernisse hinweg geführt werden. Diese Gerätschaften oder Anbauten können beispielsweise Spritzanlagen sein, die zur Schädlingsbekämpfung oder zum Düngen eingesetzt werden, wobei diese dann über hochstehende Pflanzen hinweggeführt werden, ohne dass Schäden an diesen entstehen.

Insbesondere wird bei Ausgestaltung des Spezialfahrzeuges mit den entsprechenden Vertikalstelleinheiten eine Zerstörung von am Hang wachsenden Pflanzen effektiv verhindert. Der natürliche Pflanzenwuchs ist auch am Hang senkrecht nach oben gerichtet, so dass bei Durchfahren einer entsprechenden Hangpassage mit Standardfahrzeugen die Pflanzen hangabwärts der Räder und des Fahrgestells umgefahren bzw. zerstört werden würden. Die Räder würden auf Grund der senkrechten Aufstellung auf der Oberfläche des Hangs in diese Pflanzen hineinreichen und sie zerstören. Durch Verwendung des erfindungsgemäß verstellbaren Spezialfahrzeugs wird bei paralleler Ausrichtung der Räder zu den angebauten Pflanzen der Pflanzenbestand nicht beeinträchtigt.

Dadurch, dass das Spezialfahrzeug Aufbauten aufweist, wobei an dem Spezialfahrzeug und/oder den Aufbauten eine Gerätschaft angeordnet ist, wobei die Gerätschaft um eine entlang der Fahrtrichtung orientierte Drehachse über eine Winkelverstellaufnahme um einen Winkel drehbar angeordnet ist, kann die Gerätschaft einen anderen Winkel aufweisen, so dass die Gerätschaft parallel zum Hang ausgerichtet werden kann, obwohl das Fahrzeug horizontal, also in einen Winkel α zum Hang, ausgerichtet ist. So können das Gewicht des Spezialfahrzeuges auf alle Räder gleichmäßig verteilt und gleichzeitig die Gerätschaften parallel zum Hang geführt werden. Beispielsweise können wie oben beschrieben diese Gerätschaften Sprühanlagen sein, die nur sinnvoll und effizient arbeiten können, wenn diese einen gleichmäßigen Abstand zum Boden bzw. zu den zu besprühenden Objekten aufweisen.

Wenn eine zentrale Steuereinheit zur Einzelansteuerung und/oder zur seitenweisen Ansteuerung der höhenverstellbaren Radaufhängungen und/oder der Winkelverstellaufnahme vorgesehen ist, wird die gesamte Regelung von einer zentralen Stelle aus gesteuert. Gleichzeitig kann die zentrale Steuereinheit hierfür auch eine Anzeige aufweisen, an der der Fahrer die Neigung ablesen kann. Warnungen, falls die Neigung einmal die zulässige maximale Neigung überschreiten sollte, können ebenfalls dargestellt werden. Es kann eine automatische Anpassung während des Fahrens erfolgen, so dass sich das Spezialfahrzeug permanent selbst ausrichtet. Hierfür ist es besonders vorteilhaft, wenn die zentrale Steuereinheit Neigungssensoren aufweist.

Wenn die Radaufhängungen mit vom Fahrer fernsteuerbaren Horizontalstelleinheiten zur Veränderung der Spurweite während der Fahrt versehen sind, ermöglicht dies die Anpassung der Spurweite an die landwirtschaftliche Kultur, bei der Kulturpflanzen wie Mais, Raps oder Sonnenblumen in unterschiedlichen Reihenabständen angebaut werden. Außerdem hat die Verbreiterung der Spurweite den Vorteil, dass auch eine größere Bodenfreiheit eingestellt werden kann, ohne dass die Standsicherheit des Fahrzeugs gefährlich verringert würde. Dies ermöglicht den Einsatz eines erfindungsgemäß ausgestatteten Fahrzeugs auch bei sehr hochwachsenden Kulturen, wie Mais und Sonnenblumen, da die Bodenfreiheit groß genug gewählt werden kann.

Die ferngesteuerte Verstellung der Spurbreite und der Bodenfreiheit sowie der Ansteuerung zur Ausrichtung des Fahrzeugs zum Gelände, wie Neigung, etc. aus der Fahrerkabine bedeutet für den Anwender eine enorme Arbeitserleichterung und gleichzeitig wird dadurch die Arbeitssicherheit erhöht. Es müssen keine gefährlichen Montagearbeiten vor Ort ausgeführt werden, um die Höhe, Breite oder Neigung des Fahrwerks zu verändern. Auch die Verwendung von Pressen, Schrauben und Drehmomentschlüsseln ist nicht erforderlich. Die Unfallgefahr und damit verbundene Ausfälle werden vermindert, auch braucht der Fahrer keine Kenntnisse für die Tätigkeit als Umbaumonteur. Vom betriebswirtschaftlichen Standpunkt aus gesehen, können die Arbeiten sehr viel wirtschaftlicher durch weniger qualifizierte Kräfte und in kürzerer Zeit durchgeführt werden.

Nach getaner Arbeit können sowohl Bodenfreiheit, Spurweite als auch eine individuell eingestellte Neigung auf einfache Weise wieder reduziert werden, um öffentliche Wege und Straßen befahren zu dürfen. Gesetzlich ist die Breite eines Fahrzeuges auf 2,5 m und die Höhe auf 4,0 m begrenzt. Diese Werte können ohne weiteres eingehalten werden. Zur Veränderung der Spurweite, der Bodenfreiheit und/oder der Neigung braucht der Fahrer nicht einmal auszusteigen. Beim nächsten Einsatz können Spurweite, Bodenfreiheit und Neigung wieder an ganz andere Bedingungen angepasst werden, ohne dass es besonderer Vorbereitungen dafür bedürfte.

In einer bevorzugten Ausführungsform sind die Stellmotoren für die Stelleinheiten als Hydraulikzylinder ausgestaltet. Hydraulische Aggregate sind zuverlässig, weit verbreitet und kostengünstig zu beschaffen. In der Regel ist ein hier in Frage kommendes Spezialfahrzeug ohnehin mit einer Hydraulikanlage ausgestattet, so dass nur geringe Zusatzkosten für die Realisierung der Erfindung entstehen.

Zur Abstützung des Fahrzeuggewichts sind ineinander verschiebbare Führungsprofile aus Stahl vorgesehen, die quer zur Verschieberichtung durch das Fahrzeuggewicht belastet werden und somit die Stelleinheiten entlasten, welche nur mit Kräften in Verstellrichtung belastet werden.

Wenn die Spurweite im Bereich zwischen 1,8 m und 3,0 m einstellbar ist, können im unteren Teil des Verstellbereichs die gesetzlichen Bestimmungen für Fahrten auf öffentlichen Wegen und Straßen eingehalten werden und andererseits steht ein ausreichender Spielraum für die Anpassung der Spurweite an die Pflanzabstände der landwirtschaftlichen Kulturen zur Verfügung. Auf diese Weise lässt sich immer eine Spurweite finden, bei der alle Räder zwischen zwei Pflanzreihen rollen und die Pflanzen nicht beschädigen.

Wenn eine Vorrichtung zur Anzeige der aktuellen Spurweite am Fahrerstand vorgesehen ist, vorzugsweise in Form eines Computerterminals, kann der Fahrer die momentan gewählte Spurweite ganz bequem ablesen und bedarfsweise auf einen anderen gewünschten Wert einstellen, beispielsweise für die Befahrung von öffentlichen Straßen oder für die Befahrung eines Maisfeldes, von dem der Abstand der Pflanzreihen bekannt ist. Ein Ausprobieren oder manuelles Abstimmen der Spurweite ist nicht erforderlich.

In Ausgestaltung der Erfindung ist ein Bedienschalter zur Spurweitenverstellung am Fahrerstand vorgesehen, vorzugsweise an einem Computerterminal. Durch die Anordnung des Bedienschalters kann der Fahrer ohne den Fahrerstand zu verlassen die Spurweitenverstellung vornehmen, während er das Fahrzeug führt, denn ohne eine geringfügige Vorwärtsgeschwindigkeit kann die Spurverstellung nicht vorgenommen werden. Der Bedienschalter wird auf einfache Weise am Computerterminal angeordnet sein, welches auch die Spurweitenanzeige umfasst.

Wenn die einzustellende Spurweite vorwählbar ist, insbesondere durch Auswahl einer Spurweite aus mehreren fest vorgegebenen Werten, braucht die Bedienperson nicht ständig auf die sich verändernden Werte achten, um im richtigen Moment die Spurverstellung zu unterbrechen. Vielmehr kann durch die genannte Maßnahme der gewünschte Wert ausgewählt und anschließend der Bedienschalter betätigt werden, bis sich die gewünschte Spurweite eingestellt hat.

Da eine Verstellung der Spurweite bei Stillstand der Räder nicht möglich ist und eventuell zu Beschädigungen führen kann, schlägt eine Weiterbildung der Erfindung vor, dass eine Sperre vorgesehen ist, die eine Veränderung der Spurweite bei Stillstand der Räder verhindert, vorzugsweise in Form einer softwaremäßigen oder hardwaremäßigen elektronischen Sperre in einer Steuervorrichtung zur Steuerung der Horizontalstelleinheiten. Eine solche Sperre lässt sich besonders einfach realisieren, wenn die Steuervorrichtung einen programmierbaren Mikroprozessor enthält. Die Steuervorrichtung muss dann nur noch mit einem oder mehreren Drehsensoren zur Erfassung der Drehbewegung der Räder verbunden sein. Solche Drehsensoren sind in der Regel ohnehin zur Erfassung der Fahrzeuggeschwindigkeit vorhanden und müssen daher nicht gesondert eingebaut werden. Dann beschränkt sich die Realisierung der elektronischen Sperre darin, ein dies berücksichtigendes Programm in die Steuerungssoftware einzufügen.

In Ausgestaltung der Erfindung sind die Radaufhängungen mit einer mechanischen Arretierung für die Spurweite versehen, vorzugsweise in Form einer Exzenter-Arretierung. Durch die mechanische Arretierung wird die eingestellte Spurweite konstant gehalten, ohne dass die Horizontalstelleinheiten belastet werden oder aktiviert werden müssten. Eine unabsichtliche Verstellung der Spurweite wird somit verhindert.

In einer bevorzugten Ausführungsform ist die mechanische Arretierung hydraulisch betätigbar und vom Fahrer fernsteuerbar. Zum Arretieren oder Lösen der Arretierung braucht der Fahrer somit den Fahrerstand nicht zu verlassen. Eine hydraulische Betätigung hat wiederum die oben bereits genannten Vorteile.

In Ausgestaltung der Erfindung sind die Räder einer angetriebenen Achse jeweils mit einem hydraulischen Radnabenmotor versehen, wobei vorzugsweise zwei angetriebene Achsen mit vier Rädern vorgesehen sind. Ein hydraulischer Motor ist bei ohnehin vorhandener Hydraulikanlage mit geringem Aufwand realisierbar. Durch die Ausgestaltungsform als Radnabenmotor entfallen Antriebswellen und Ausgleichsgetriebe. In seiner einfachsten Ausführungsform besitzt das Fahrgestell vier Räder, die zur sicheren Fortbewegung im schwierigen Gelände vorzugsweise alle angetrieben sind.

In Ausgestaltung der Vertikalstelleinheiten ist vorgesehen, dass diese in Form von jeweils zwei in Fahrtrichtung hintereinander angeordneten vertikal ausgerichteten Hydraulikzylindern ausgeführt sind. Auf diese Weise kann auf weitere Radaufhängungsmittel, insbesondere Lenker verzichtet werden. Lediglich die gelenkten Räder müssen schwenkbar befestigt sein.

In Ausgestaltung der Erfindung ist vorgesehen, dass eine punktuelle Bodenfreiheit, bedingt durch die Neigung, zwischen 0,3 m und 4,0 m einstellbar ist. Hierzu ist auch ein Minimalabstand zum Boden vorwählbar, so dass dieser Abstand in jedem Fall an der flachsten Stelle eingehalten wird. Die höchste Bodenfreiheit von 4,0 m reicht aus, um damit Mais oder Sonnenblumenkulturen an einem geneigten Hang befahren zu können, ohne die Pflanzen zu beschädigen. Bei einer Bodenfreiheit von 1,15 m ist ein sicheres Fahren auf öffentlichen Straßen möglich, ohne dass die gesetzliche Maximalhöhe für das Fahrzeug überschritten wird und ohne das die Gefahr des Umkippens besteht.

Eine Anzeigevorrichtung zur Anzeige der aktuellen Bodenfreiheit am Fahrerstand, vorzugsweise in Form eines Computerterminals, ein Bedienschalter zur Höhenverstellung am Fahrerstand, vorzugsweise am Computerterminal, und die Vorwählbarkeit der Bodenfreiheit, insbesondere durch Auswahl aus mehreren vorgegeben Werten hat die weiter oben bereits im Zusammenhang mit der Spurweitenverstellung beschriebenen Vorteile.

Zur Erhöhung der Sicherheit und insbesondere zum Verhindern des Kippens des Fahrzeugs ist vorgesehen, dass eine Antriebssteuervorrichtung einen Geschwindigkeitsbegrenzer aufweist, der bei einer größeren Bodenfreiheit als ein vorgegebener Grenzwert die Fahrgeschwindigkeit des Fahrgestells auf einen vorgegebenen Wert begrenzt, vorzugsweise wird bei einer größeren Bodenfreiheit als 1,3 m die Geschwindigkeit elektronisch auf maximal 15 km/h begrenzt.

In Ausgestaltung der Erfindung ist eine Luftfederung vorgesehen, die einen Lastregler aufweist, der die Bodenfreiheit bei variablem Ladungsgewicht konstant hält. Dadurch wird sichergestellt, dass die Bodenfreiheit immer konstant den vorgewählten Wert aufweist, auch wenn das Fahrzeug Last aufgenommen hat, beispielsweise Spritzmittel. Genauso bleibt die Bodenfreiheit konstant, wenn das Fahrzeug beispielsweise beim Betrieb auf dem Acker das Spritzmittel verspritzt und dabei Ladungsgewicht verliert.

In Ausgestaltung einer Vorderachse mit lenkbaren Rädern ist eine pendelgelagerte Vorderachse vorgesehen, die über ein mittig angeordnetes Gelenklager mit dem Fahrgestell verbunden und mit einem Querstabilisator versehen ist. Um die Funktion der Vorderachse auch bei Verstellung der Spurweite zu gewährleisten, ist die Vorderachse zur Lenkung der Vorderräder mit einer Spurstange versehen, die einen Hydraulikzylinder aufweist, der zur Längsverstellung der Spurstange synchron zur Verstellung der Spurweite der Vorderräder dient.

Das erfindungsgemäße Fahrgestell wird noch verbessert, wenn die Räder mit Pflanzenabweisern versehen sind, die aus einer die Vorderseite der Räder umgebenden Verkleidung aus Blech oder Kunststoff bestehen, die nach vorne spitz zuläuft. Diese Verkleidung sorgt dafür, dass eventuell in dem Bereich der Räder hineinragende Pflanzenteile beim Vorbeifahren zur Seite geschoben und nicht überfahren werden. Der Pflanzenbestand wird dadurch geschont.

Nachfolgend wird ein Ausführungsbeispiel des erfindungsgemäßen Fahrgestells für Spezialfahrzeuge anhand der beiliegenden Zeichnung detailliert beschrieben.

Darin zeigt:
- Fig. 1: eine schematische Darstellung eines Spezialfahrzeuges am Hang;
- Fig. 2: eine perspektivische Darstellung eines erfindungsgemäßen Fahrgestells im Zustand mit minimaler Spurweite und Bodenfreiheit;
- Fig. 3: eine perspektivische Darstellung eines erfindungsgemäßen Fahrgestells im Zustand mit maximaler Spurweite und Bodenfreiheit;
- Fig. 4: eine Teilansicht einer hinteren Radaufhängung im eingefahrenen Zustand;
- Fig. 5: eine Teilansicht einer hinteren Radaufhängung im ausgefahrenen Zustand;
- Fig. 6: eine perspektivische Ansicht des Vorderachsbereichs eines erfindungsgemäßen Fahrgestells im eingefahrenen Zustand;
- Fig. 7: eine Schnittdarstellung des Vorderachsbereichs eines erfindungsgemäßen Fahrgestells im eingefahrenen Zustand mit minimaler Spurweite und
- Fig. 8: eine Schnittdarstellung des Vorderachsbereichs eines erfindungsgemäßen Fahrgestells im ausgefahrenen Zustand mit maximaler Spurweite.

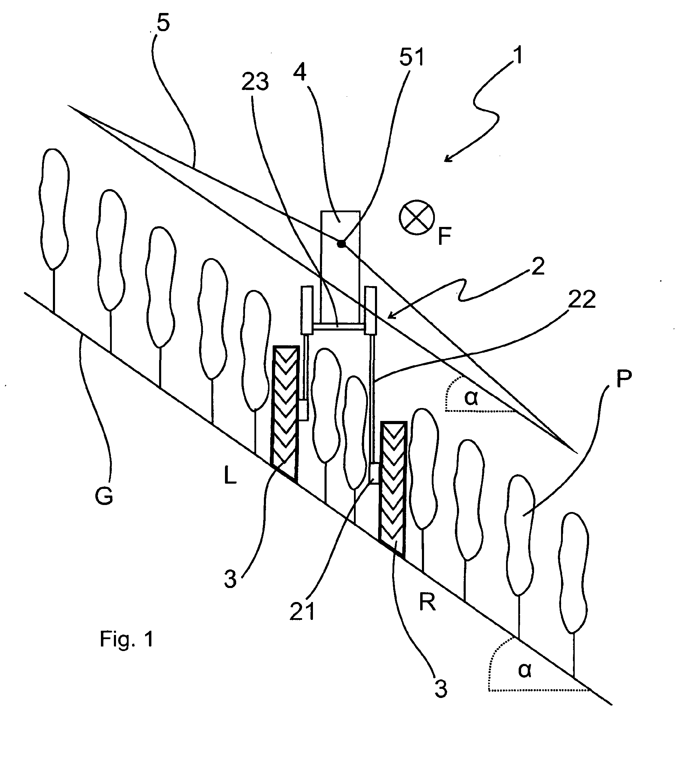

Fig. 1 zeigt ein Spezialfahrzeug 1 an einem Hang G. Das Spezialfahrzeug 1 weist ein Fahrgestell 2 mit einer Horizontalstelleinheit 23 und einer Radaufhängung 21 auf. Die Radaufhängung 21 umfasst unter anderem eine Vertikalstelleinheit 22, an der am jeweiligen unteren Ende ein Rad 3 des Spezialfahrzeuges angeordnet ist

Weiter weist das Spezialfahrzeug 1 Aufbauten 4 auf. Diese Aufbauten 4 sind unter anderem die Motorbaugruppe, das Fahrerhaus und entsprechende fahrzeugspezifische Vorrichtungen, wie Aggregate oder dgl. Weiter weist das Spezialfahrzeug 1 noch Gerätschaften 5 auf. Diese Gerätschaften 5 können beispielsweise wie im dargestellten Ausführungsbeispiel Sprüheinrichtungen großer Arbeitsbreite sein, um beispielsweise Pflanzen zu düngen oder eine Schädlingsbekämpfung an diesen Pflanzen durchzuführen. Zu einer solchen Sprühanordnung gehören insbesondere ein Vorratsbehälter, der auf dem Spezialfahrzeug angeordnet ist und eine Pumpanordnung, sowie ein bedarfsweise ausfahr- oder -klappbares Spritzgestänge mit Spritzdüsen.

Das Spezialfahrzeuge 1 fährt in Fahrtrichtung F, also in die Zeichenebene der Fig. 1 hinein, an einem Hang G, der im Wesentlichen senkrecht zur Fahrtrichtung F ein Gefälle mit einem Winkel α aufweist. Das Gelände ist in Fahrtrichtung F auf der linken Seite L höher als auf der rechten Seite R. Dieses Hanggefälle würde im Normalfall das Spezialfahrzeug, was ein erhebliches Gewicht aufweist, am Hang abrutschen lassen oder zum Umkippen des Spezialfahrzeuges führen. Um diesem Umkippen oder Abrutschen entgegenzuwirken weist das Spezialfahrzeug 1 zusätzlich zu den Horizontalstelleinheiten 23 an dem Fahrgestell 2 die Vertikalstelleinheiten 22 auf, die entsprechend des Winkels α einzeln ansteuerbar sind. Durch weites Herausfahren einzelner oder auch paarweises Herausfahren von Vertikalstellelementen 22 kann das Fahrzeug trotz der Hangfahrt horizontal ausgerichtet werden, so dass ein Umkippen oder Wegrutschen am Hang verhindert wird. Dies wird insbesondere durch die vorherrschenden gleichen Belastungen auf die einzelnen Räder bewirkt, so dass der Schwerpunkt in der Mitte des Fahrzeugs gehalten wird.

Wenn allerdings das Spezialfahrzeug 1 eine Gerätschaft 5 entsprechend einer Spritzanlage, wie hier dargestellt, aufweist, könnte die Spritzanlage nicht effizient und ressourcenschonend arbeiten, da nicht überall ein gleichmäßiger Abstand zu den am Hang befindlichen Pflanzen P vorherrscht. Die Pflanzen P am Hang G würden also mit unterschiedlicher Intensität an Chemikalien, Düngemitteln oder Schädlingsbekämpfungsmitteln bedeckt werden, was zu einer erheblichen negativen Einwirkung auf das Pflanzenwachstum und die Ernte führen würde. Um derartige wirtschaftliche Schädigungen des Bestandes an Pflanzen P zu verhindern wird nunmehr das Spritzgestänge, ebenfalls um einen Winkel α gedreht, so dass das Spritzgestänge und der Hang G Parallel zueinander ausgerichtet sind. Hierdurch wird sichergestellt, dass über den gesamten Wirkbereich der Gerätschaft 5 ein gleichmäßiger Abstand zum Hang G bzw. zu den Pflanzen P besteht.

Ein weiterer Vorteil der horizontalen Ausrichtung des Spezialfahrzeuges ist die damit verbundene senkrechte Ausrichtung der Vertikalstellelemente 22 und der Räder 3. Durch diese annähernd senkrechte Ausrichtung der vertikalen Bauteile des Fahrgestells 2 und der Räder 3 wird der Bestand an Pflanzen P geschont. Da die Pflanzen selbst am Hang G senkrecht gen Himmel wachsen, wäre bei Fahrten am Hang G ohne Ausgleich eines Gefälles eine Beschädigung der Pflanzen P wahrscheinlich. Die Räder und auch Teile des Fahrgestells 2 würden Teile der Pflanzen P über- oder umfahren, so dass zumindest in den Reihen rechts R des linken Rades 3 L und rechts R des rechten Rades 3 R die Pflanzen P heruntergedrückt bzw. einfach umgefahren würden. Hierdurch würde ein erheblicher wirtschaftlicher Schaden entstehen, der mit dem erfindungsgemäßen Spezialfahrzeug vermieden werden kann.

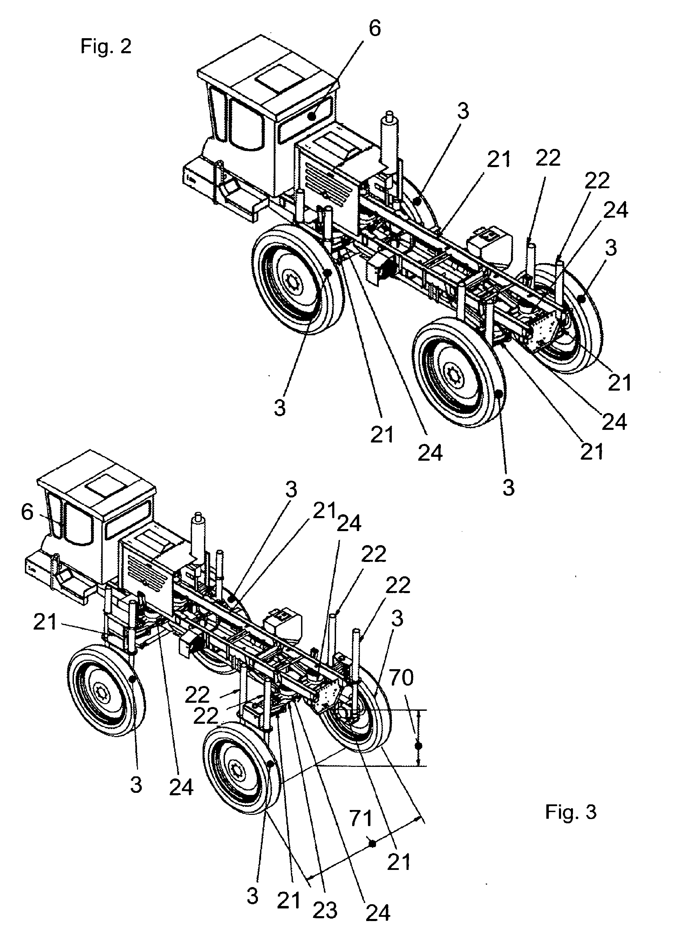

In den Fig. 2 und 3 ist ein Fahrgestell 2 für Spezialfahrzeuge 1, insbesondere zur Verwendung in der Landwirtschaft, beispielsweise als Spritzfahrzeug zum Aufbringen von Spritzmitteln auf landwirtschaftliche Kulturen, dargestellt. Der jeweilige Aufbau (Gerätschaften 5) für das Fahrgestell 2, beispielsweise ein Tank und ausfahrbare Arme zum Ausbringen der Spritzmittel, sind in den Figuren 2 und 3 nicht dargestellt.

Das dargestellte Fahrgestell 2 hat vier Radaufhängungen 21, mit denen sowohl die Höhe des Fahrgestells und damit seine Bodenfreiheit 70 als auch die Spurweite 71 der Räder 3 einstellbar ist. Mit Hilfe der erfindungsgemäßen Ausgestaltung lässt sich die Spurweite 71 zwischen 1,8 m (siehe Fig. 2) und 3,0 m (siehe Fig. 3) einstellen. Die Einstellung erfolgt mittels elektrohydraulischer Mittel, wobei am Fahrerstand 6 eine nicht gezeigte Anzeigevorrichtung zur Anzeige der aktuellen Spurweite vorgesehen ist.

Die Anzeige ist in Form eines Computerterminals ausgestaltet, welches darüber hinaus mit einem Bedienschalter zur ferngesteuerten Spurweitenverstellung durch den Fahrer versehen ist. Das Computerterminal ist mit einem Steuergerät verbunden, vorzugsweise einem Computer, über den die elektrohydraulischen Verstelleinheiten steuerbar sind. In dem Computer sind mehrere vorgegebene Werte für Spurweiten abgespeichert, so dass der Fahrer über das Computerterminal lediglich eine passende Spurweite auswählen muss. Darüber hinaus kann der Fahrer auch einen beliebigen Wert für die Spurweite in das Computerterminal eingeben. Selbstverständlich ist die Spurweitenverstellung auch mittels des Bedienschalters direkt vornehmbar, wobei der Fahrer oder eine Hilfsperson die Räder beobachtet, um festzustellen, wann die gewünschte Spurweite 71 erreicht ist.

Da die Spurweitenverstellung nur während der Fahrt möglich ist, sorgt eine elektronisch realisierte Sperre in der Steuervorrichtung dafür, dass die Verstellung der Spurweite 71 bei Stillstand der Räder 3 blockiert wird.

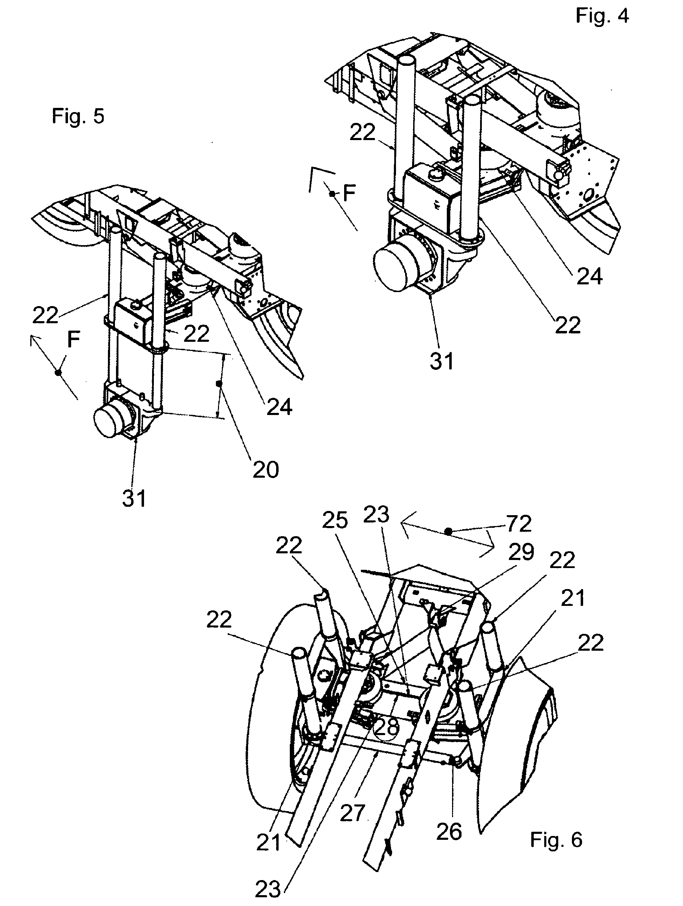

Wie man am besten in den Fig. 4 und Fig. 5 erkennt, ist jede Radaufhängung 21 mit zwei Vertikalstelleinheiten 22 versehen, die in Fahrtrichtung F hintereinander angeordnet sind und aus vertikal angeordneten Hydraulikzylindern bestehen. An der Unterseite der Vertikalstelleinheiten 22 ist jeweils ein hydraulischer Radnabenmotor 31 befestigt, der das jeweilige Rad 3 trägt. Im vorliegenden Ausführungsbeispiel sind vier Radnabenmotoren 31 an jedem der vier Räder 3 vorgesehen, so dass alle Räder 3 an beiden "Achsen" angetrieben sind.

Zur Veränderung der Bodenfreiheit 70 werden die Hydraulikzylinder der Vertikalstelleinheiten 22 an allen vier Radaufhängungen 21 ausgefahren, so dass sich das Fahrgestell 2 insgesamt nach oben bewegt. Dabei steht ein maximaler Verstellweg 20 (siehe Fig. 5) von 0,85 m zur Verfügung.
Fig. 4 zeigt den Zustand mit vollständig eingefahrenen Vertikalstelleinheiten 22, bei dem eine Bodenfreiheit von 1,15 m erreicht wird.
Fig. 5 zeigt den Zustand mit vollständig ausgefahrenen Vertikalstelleinheiten 22, bei dem eine Bodenfreiheit von 2,0 m erreicht wird.

Wie auch bei der Horizontalverstellung ist am Fahrerstand 6 eine Anzeigevorrichtung zur Anzeige der Bodenfreiheit 70 vorgesehen, nämlich in dem oben erwähnten Computerterminal, welches in den Zeichnungen nicht dargestellt ist. Ebenfalls ist an dem Computerterminal ein Bedienschalter zur ferngesteuerten Höhenverstellung durch den Fahrer vom Fahrerstand 6 aus vorgesehen. Dieser kann zwischen vorgegebenen, im Computer gespeicherten Werten für die Bodenfreiheit auswählen, oder einen Wert für die Bodenfreiheit 70 direkt eintippen oder den Bedienschalter solange bedienen, bis die gewünschte Bodenfreiheit 70 erreicht ist.

Über den Computerterminal können auch Geländeneigungen eingegeben werden, so dass das Spezialfahrzeug mit seinen Vertikalstelleinheiten 22 so angesteuert wird, dass eine gewünschte Orientierung des Fahrzeugs, bevorzugt horizontal, erreicht wird. Dabei kann auch die jeweils momentan gefahrene Fahrtrichtung zum Hang bei der Einstellung der Vertikalstelleinheiten berücksichtigt werden, beispielsweise können bei einer Diagonalfahrt am Hang vier verschiedene Höheneinstellungen eingestellt werden, um das Fahrzeug horizontal auszurichten. Dazu ist es auch möglich, dass am Fahrzeug selbst eine Messeinrichtung für die räumliche Orientierung vorgesehen ist, wobei bei Änderungen in der gemessenen Orientierung sofort eine geeignete Gegensteuerung durch individuelle Veränderung der Höheneinstellung der Vertikalstelleinheiten gegeben ist.

Des Weiteren ist in dem genannten Bordcomputer eine Antriebssteuervorrichtung realisiert, die einen Geschwindigkeitsbegrenzer aufweist. Im Falle, dass die Bodenfreiheit 70 einen größeren Wert als einen vorgegebenen Grenzwert aufweist, sorgt der Geschwindigkeitsbegrenzer dafür, dass die Fahrgeschwindigkeit des Fahrgestells auf einen ebenfalls vorgegebenen Wert begrenzt wird. Im vorliegenden Fall wird die Fahrgeschwindigkeit elektronisch auf maximal 15 km/h begrenzt, sobald die Bodenfreiheit 70 größer als 1,3 m ist.

Wie man am besten in den Fig. 2 bis Fig. 5 erkennt, ist das Fahrgestell mit einer Luftfederung versehen, die aus vier Luftfedereinheiten 24 und einer nicht gezeigten pneumatischen Versorgungseinheit besteht. Die Luftfedereinheiten 24 sind außerdem mit einer Steuervorrichtung verbunden, die im erwähnten Bordcomputer untergebracht ist. Außerdem sind in den Figuren nicht gezeigte Lastregler vorgesehen, die Sensoren für die Bodenfreiheit 70 aufweisen und die Luftfedereinheiten 24 jeweils so ansteuern, dass bei sich änderndem Ladungsgewicht eine konstante Bodenfreiheit 70 hergestellt wird.

Wie man am besten in Fig. 6 erkennt, ist eine pendelgelagerte Vorderachse 28 vorgesehen, die über ein mittig angeordnetes Gelenklager 29 mit dem Fahrgestell 2 verbunden ist und einen Querstabilistator 25 aufweist.

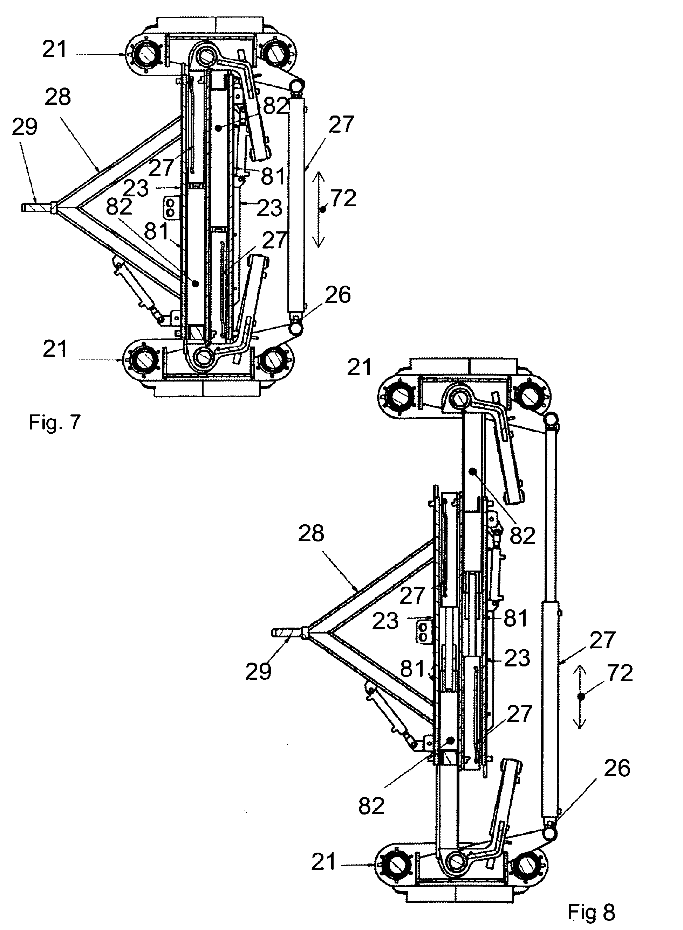

Für die Horizontalverstellung in Verstellrichtung 72 weist jede Achse zwei Horizontalstelleinheiten 23 auf, die beispielhaft für die Vorderachse 28 in Fig. 7 und Fig. 8 im Detail dargestellt sind. Jede Horizontalstelleinheit 23 hat zwei Hydraulikzylinder 27, die im Inneren eines äußeren Führungsprofils 81 angeordnet sind. Die äußeren Führungsprofile 81 sind fest mit der Vorderachse 29 verbunden. Im Inneren der äußeren Führungsprofile 81 sind innere Führungsprofile 82 verschiebbar angeordnet. Die inneren Führungsprofile 82 sind jeweils mit den Vertikalstelleinheiten 22 fest verbunden. Die Hydraulikzylinder 27 stützen sich einerseits am jeweiligen äußeren Führungsprofil 81 ab und sind mit Ihren beweglichen Enden an den in Verstellrichtung 72 verschiebbaren inneren Führungsprofilen 82 befestigt. Bei Betätigung der Horizontalstelleinheit 23 werden die Hydraulikzylinder 27 mit Hydraulikflüssigkeit beaufschlagt, so dass die inneren Führungsprofile 82 in den äußeren Führungsprofilen 82 in Verstellrichtung 72 verschoben werden. Dabei werden die mit den inneren Führungsprofilen 82 fest verbundenen Vertikalstelleinheiten 22 und die mit den Vertikalstelleinheiten 22 verbundenden Räder 3 ebenfalls in Verstellrichtung 72 verschoben und zwar je nach Beaufschlagung der Hydraulikzylinder 27 entweder nach außen oder nach innen. Dabei werden die Hydraulikzylinder 27 lediglich mit einer Verstellkraft in Verstellrichtung 72 beaufschlagt. Die zur Abstützung des Fahrgestells 2 über die Räder 3 in vertikaler Richtung wirkenden Kräfte, die aus den Gewichtskräften an den Radaufhängungen 21 resultieren, wirken quer zur Verstellrichtung 72 und belasten daher nur die Führungsprofile 81, 82.

Eine für die Lenkung der Vorderräder 3 vorgesehene Spurstange 26 ist im Wesentlichen in Form eines weiteren Hydraulikzylinders 27 ausgestaltet, um bei einer Verstellung der Spurweite 71 in Verstellrichtung 72 die Länge der Spurstange 26 an die veränderte Spurweite 71 anzupassen. Die Verstellung der Länge der Spurstange 26 erfolgt synchron zur Verstellung der Spurweite 71 in Verstellrichtung 72.

Die Verstellung der Hinterachse erfolgt ganz analog zur Verstellung der Vorderachse 28, wobei die Horizontalstelleinheit 23 entsprechend ausgebildet sind. Lediglich die Spurstange 26 ist bei der Hinterachse nicht vorgesehen.

### Bezugszeichenliste

- 1: Spezialfahrzeug
- 2: Fahrgestell
- 20: Verstellweg, vertikal
- 21: Radaufhängung
- 22: Vertikalstelleinheit
- 23: Horizontalstelleinheit
- 24: Luftfedereinheit
- 25: Querstabilisator
- 26: Spurstange
- 27: Hydraulikzylinder
- 28: Vorderachse
- 29: Gelenklager
- 3: Rad
- 31: Radnabenmotor
- 4: Aufbauten
- 5: Gerätschaft
- 51: Winkelverstellaufnahme
- 6: Fahrerstand
- 70: Bodenfreiheit
- 71: Spurweite
- 72: Verstellrichtung
- 81: äußeres Führungsprofil
- 82: inneres Führungsprofil

- F: Fahrtrichtung
- G: Hang
- P: Pflanze
- α: Anstellwinkel, Hanggefälle
- L: Links
- R: Rechts

## Patentansprüche

1. Fahrgestell (2) für Spezialfahrzeuge (1), mit höhenverstellbaren Radaufhängungen (21), die vom Fahrer fernsteuerbare Vertikalstelleinheiten (22) zur Veränderung der Bodenfreiheit aufweisen, wobei die Radaufhängungen (21) mit vom Fahrer fernsteuerbaren Horizontalstelleinheiten (23) zur Veränderung der Spurweite während der Fahrt versehen sind, wobei die höhenverstellbaren Radaufhängungen (21) jeweils einzeln ansteuerbar und verstellbar sind, **dadurch gekennzeichnet, dass** an dem Fahrgestell (2) des Spezialfahrzeugs (1) Aufbauten (4) angeordnet sind, und an dem Fahrgestell (2) und/oder den Aufbauten (4) eine Gerätschaft (5) angeordnet ist, die Gerätschaft (5) um eine entlang der Fahrtrichtung (F) orientierte Drehachse (51) über eine Winkelverstellaufnahme um einen Winkel (α) drehbar angeordnet ist.

2. Fahrgestell (2) für Spezialfahrzeuge (1) nach Anspruch 1, **dadurch gekennzeichnet, dass** die höhenverstellbaren Radaufhängungen (21) jeweils seitenweise, nämlich die höhenverstellbaren Radaufhängungen (21) in Fahrtrichtung (F) auf der linken Seite (L) des Spezialfahrzeuges (1) und die höhenverstellbaren Radaufhängungen (21) in Fahrtrichtung (F) auf der rechten Seite (R) des Spezialfahrzeuges, ansteuerbar und verstellbar sind.

3. Fahrgestell (2) für Spezialfahrzeuge (1) nach Anspruch 1 oder 2, **dadurch gekennzeichnet, dass** die höhenverstellbaren Radaufhängungen (21) jeweils paarweise, nämlich die höhenverstellbaren Radaufhängungen (21) an der Front des Spezialfahrzeuges (1) und die höhenverstellbaren Radaufhängungen (21) am Heck des Spezialfahrzeuges, ansteuerbar und verstellbar sind.

4. Fahrgestell (2) für Spezialfahrzeuge (1) nach einem der vorangehenden Ansprüche, **dadurch gekennzeichnet, dass** eine zentrale Steuereinheit zur Einzelansteuerung und/oder zur seitenweisen Ansteuerung der höhenverstellbaren Radaufhängungen (21) und/oder der Winkelverstellaufnahme vorgesehen ist.

5. Fahrgestell (2) für Spezialfahrzeuge (1) nach einem der vorangehenden Ansprüche, **dadurch gekennzeichnet, dass** die zentrale Steuereinheit Neigungssensoren aufweist.

6. Fahrgestell (2) für Spezialfahrzeuge (1) nach einem der vorangehenden Ansprüche, **dadurch gekennzeichnet, dass** für die Stelleinheiten (22, 23) Hydraulikzylinder (27) als Stellmotoren vorgesehen sind.

7. Fahrgestell (2) für Spezialfahrzeuge (1) nach einem der vorangehenden Ansprüche, **dadurch gekennzeichnet, dass** ineinander verschiebbare Führungsprofile (81, 82) zur Aufnahme der Gewichtskräfte an den Radaufhängungen (21) vorgesehen sind, wobei die Führungsprofile (81, 82) im wesentlichen Kräfte quer zur Verstellrichtung (72) aufnehmen und die Horizontalstelleinheiten (23) im wesentlichen mit Kräften in Verstellrichtung (72) belastet werden.

8. Fahrgestell (2) für Spezialfahrzeuge (1) nach einem der vorangehenden Ansprüche, **dadurch gekennzeichnet, dass** die Radaufhängungen (21) mit einer mechanischen Arretierung für die Spurweite (71) versehen sind, vorzugsweise in Form einer Exzenter-Arretierung.

9. Fahrgestell (2) für Spezialfahrzeuge (1) nach einem der vorangehenden Ansprüche, **dadurch gekennzeichnet, dass** die Räder (3) einer angetriebenen Achse jeweils mit einem hydraulischen Radnabenmotor (31) versehen sind und dass vorzugsweise zwei angetriebene Achsen mit vier Rädern (3) vorgesehen sind.

10. Fahrgestell (2) für Spezialfahrzeuge (1) nach einem der vorangehenden Ansprüche, **dadurch gekennzeichnet, dass** die Vertikalstelleinheiten (22) in Form von jeweils zwei in Fahrtrichtung (F) hintereinander angeordneten und vertikal ausgerichteten Hydraulikzylindern (27) ausgeführt sind.

11. Fahrgestell (2) für Spezialfahrzeuge (1) nach einem der vorangehenden Ansprüche, **dadurch gekennzeichnet, dass** eine Luftfederung (24) vorgesehen ist, die einen Lastregler aufweist, der die Bodenfreiheit (70) bei variablem Ladungsgewicht konstant hält.

12. Fahrgestell (2) für Spezialfahrzeuge (1) nach einem der vorangehenden Ansprüche, **dadurch gekennzeichnet, dass** eine pendelgelagerte Vorderachse (28) vorgesehen ist, die über ein mittig angeordnetes Gelenklager (29) mit dem Fahrgestell verbunden und mit einem Querstabilisator (25) versehen ist.

13. Fahrgestell (2) für Spezialfahrzeuge (1) nach einem der vorangehenden Ansprüche, **dadurch gekennzeichnet, dass** die Vorderachse (28) zur Lenkung der Vorderräder (3) mit einer Spurstange (26) versehen ist, die einen Hydraulikzylinder (27) aufweist, der zur Längsverstellung der Spurstange (26) synchron zur Verstellung der Spurweite (71) der Vorderräder (3) dient.

## Claims

1. A chassis (2) for special purpose vehicles (1), having height-adjustable wheel suspensions (21) with vertical adjustment units (22), remote-controllable by the driver, for altering the ground clearance, wherein the wheel suspensions (21) are provided with horizontal adjustment units (23), remote-controllable by the driver, for altering the wheel track during travel, wherein the height-adjustable wheel suspensions (21) are each actuatable and adjustable individually, **characterised in that** superstructures (4) are arranged on the chassis (2) of the special purpose vehicle (1) and on the chassis (2) and/or the superstructures (4) there is arranged a piece of equipment (5), the piece of equipment (5) is arranged so as to be rotatable via an angle adjustment holding fixture by an angle (α) about a rotational axis (51) oriented along the direction of travel (F).

2. A chassis (2) for special purpose vehicles (1) according to claim 1, **characterised in that** the height-adjustable wheel suspensions (21) are each actuatable and adjustable by side, namely the height-adjustable wheel suspensions (21) on the left-hand side (L) of the special purpose vehicle (1) in the direction of travel (F) and the height-adjustable wheel suspensions (21) on the right-hand side (R) of the special purpose vehicle in the direction of travel (F).

3. A chassis (2) for special purpose vehicles (1) according to claim 1 or 2, **characterised in that** the height-adjustable wheel suspensions (21) are in each case actuatable and adjustable in pairs, namely the height-adjustable wheel suspensions (21) at the front end of the special purpose vehicle (1) and the height-adjustable wheel suspensions (21) at the rear end of the special purpose vehicle.

4. A chassis (2) for special purpose vehicles (1) according to any one of the preceding claims, **characterised in that** a central control unit for individual actuation and/or for actuation by side of the height-adjustable wheel suspensions (21) and/or of the angle adjustment holding fixture is provided.

5. A chassis (2) for special purpose vehicles (1) according to any one of the preceding claims, **characterised in that** the central control unit has inclination sensors.

6. A chassis (2) for special purpose vehicles (1) according to any one of the preceding claims, **characterised in that** hydraulic cylinders (27) are provided as actuators for the adjustment units (22, 23),

7. A chassis (2) for special purpose vehicles (1) according to any one of the preceding claims, **characterised in that** guide profiles (81, 82), displaceable into each other, to receive the weight forces are provided at the wheel suspensions (21), wherein the guide profiles (81, 82) substantially absorb forces transverse to the adjustment direction (72) and the horizontal adjustment units (23) are substantially loaded with forces in the adjustment direction (72).

8. A chassis (2) for special purpose vehicles (1) according to any one of the preceding claims, **characterised in that** the wheel suspensions (21) are provided with a mechanical locking device for the wheel track (71), preferably in the form of an eccentric locking device.

9. A chassis (2) for special purpose vehicles (1) according to any one of the preceding claims, **characterised in that** the wheels (3) of a powered axle are each provided with an hydraulic wheel-hub motor (31) and **in that** preferably two powered axles with four wheels (3) are provided.

10. A chassis (2) for special purpose vehicles (1) according to any one of the preceding claims, **characterised in that** the vertical adjustment units (22) are in the form of in each case two hydraulic cylinders (27) which are arranged one behind the other in the direction of travel (F) and are directed vertically.

11. A chassis (2) for special purpose vehicles (1) according to any one of the preceding claims, **characterised in that** air suspension (24) is provided, which has a load regulator which keeps the ground clearance (70) constant with variable weight of load.

12. A chassis (2) for special purpose vehicles (1) according to any one of the preceding claims, **characterised in that** a pendulum-mounted front axle (28) is provided, which is connected to the chassis via a centrally arranged pivoting bearing (29) and is provided with a roll stabiliser (25).

13. A chassis (2) for special purpose vehicles (1) according to any one of the preceding claims, **characterised in that** the front axle (28) is provided with a track rod (26) for steering the front wheels (3), which track rod (26) has an hydraulic cylinder (27) serving to longitudinally adjust the track rod (26) synchronously to the adjustment of the wheel track (71) of the front wheels (3).

## Revendications

1. Châssis (2) pour véhicules spéciaux (1), avec des suspensions de roue (21) réglables en hauteur et qui présentent des unités de réglage vertical (22) pouvant être commandées à distance par le conducteur pour modifier la garde au sol, la suspension des roues (21) étant munie d'unités de réglage horizontal (23) pouvant être commandées à distance par le conducteur pour modifier l'écartement des roues, chaque suspension de roue (21) réglable en hauteur pouvant être commandée et réglée séparément, **caractérisé en ce que** des superstructures (4) sont disposées sur le châssis (2) du véhicule spécial (1) et un outil (5) est disposé sur le châssis (2) et/ou sur les superstructures (4), l'outil (5) étant disposé pivotant d'un angle (α) autour d'un axe de rotation (51) orienté dans la direction du sens de la marche (F) par le biais d'un dispositif de réglage d'angle.

2. Châssis (2) pour véhicules spéciaux (1) selon la revendication 1, **caractérisé en ce que** les suspensions de roue (21) réglables en hauteur peuvent être commandées et réglées pour chaque côté, à savoir les suspensions de roue (21) réglables en hauteur situées du côté gauche (L) du véhicule spécial (1) dans le sens de la marche (F) et les suspensions de roue (21) réglables en hauteur situées sur le côté droit (R) du véhicule spécial (1) dans le sens de la marche (F).

3. Châssis (2) pour véhicules spéciaux (1) selon la revendication 1 ou 2, **caractérisé en ce que** les suspensions de roue (21) réglables en hauteur peuvent être commandées et réglées par paires, à savoir les suspensions de roue (21) réglables en hauteur situées à l'avant du véhicule spécial (1) et les suspensions de roue (21) réglables en hauteur situées à l'arrière du véhicule spécial (1).

4. Châssis (2) pour véhicules spéciaux (1) selon l'une des revendications précédentes, **caractérisé en ce qu'**une unité de commande centrale est prévue pour la commande individuelle et/ou la commande par côté des suspensions de roue (21) réglables en hauteur et/ou du dispositif de réglage de l'angle.

5. Châssis (2) pour véhicules spéciaux (1) selon l'une des revendications précédentes, **caractérisé en ce que** l'unité de commande centrale est munie de capteurs d'inclinaison.

6. Châssis (2) pour véhicules spéciaux (1) selon l'une des revendications précédentes, **caractérisé en ce que** des cylindres hydrauliques (27) sont prévus comme servomoteur pour les unités de réglage (22, 23).

7. Châssis (2) pour véhicules spéciaux (1) selon l'une des revendications précédentes, **caractérisé en ce que** des profilés de guidage (81, 82) coulissant l'un dans l'autre sont prévus pour recevoir les forces de poids sur les suspensions de roue (21), les profilés de guidage (81, 82) recevant essentiellement les forces transversales à la direction de réglage (72) et les unités de réglage horizontal (23) étant soumises essentiellement aux forces dans la direction de réglage (72).

8. Châssis (2) pour véhicules spéciaux (1) selon l'une des revendications précédentes, **caractérisé en ce que** les suspensions de roue (21) sont munies d'un dispositif d'arrêt mécanique pour l'écartement des roues (71), de préférence sous la forme d'un blocage excentrique.

9. Châssis (2) pour véhicules spéciaux (1) selon l'une des revendications précédentes, **caractérisé en ce que** les roues (3) d'un axe moteur sont munies chacune d'un moteur sur moyeu de roue (31) hydraulique et **en ce qu'**il est prévu de préférence deux axes moteurs avec quatre roues (3).

10. Châssis (2) pour véhicules spéciaux (1) selon l'une des revendications précédentes, **caractérisé en ce que** les unités de réglage vertical (22) sont réalisées chacune sous la forme de deux cylindres hydrauliques (27) orientés verticalement et disposés l'un derrière l'autre dans le sens de la marche (F).

11. Châssis (2) pour véhicules spéciaux (1) selon l'une des revendications précédentes, **caractérisé en ce qu'**il est prévu un amortisseur pneumatique (24) qui est muni d'un régulateur de charge qui maintient la garde au sol (70) constante en cas de poids de charge variable.

12. Châssis (2) pour véhicules spéciaux (1) selon l'une des revendications précédentes, **caractérisé en ce qu'**il est prévu un axe avant (28) articulé oscillant, lequel axe est relié au châssis par une articulation à rotule disposée au centre et est muni d'un stabilisateur transversal (25).

13. Châssis (2) pour véhicules spéciaux (1) selon l'une des revendications précédentes, **caractérisé en ce que** pour la direction des roues avant (3), l'axe avant (28) est muni d'une barre d'accouplement (26) qui est munie d'un cylindre hydraulique (27) qui sert à régler la longueur de la barre d'accouplement (26) de façon synchronisée avec le réglage de l'écartement des roues (71) des roues avant (3).
